# EUROPEAN PATENT APPLICATION

(11) **EP 2 574 071 A1**
(43) Date of publication of application: **27.03.2013**
(21) Application number: 12165294.5
(22) Date of filing: 24.04.2012
(51) Int. Cl.: H04N 21/43, H04L 29/06

(54) **Electronic systems and content playing methods thereof**

(30) Priority: 22.09.2011 TW 100134106
(71) Applicant: Acer Incorporated, Taipei Hsien 221 (TW)
(72) Inventor: Hsu, Chia-Liang, 221 Taipei Hsien (TW); Liu, Kwen-Wei, 221 Taipei Hsien (TW)
(74) Representative: Becker Kurig Straus

(57) **Abstract**

A content playing method is provided, including the steps of: a metadata is received from a first electronic device when a second electronic device is communicatively connected to the first electronic device playing a first content, wherein the metadata comprises a current playback position of the first content and a universal resource locator of the first content; the first content is received from a server according to the universal resource locator of the first content; and the first content is continually played from the current playback position by the second electronic device.

## Description

### CROSS REFERENCE TO RELATED APPLICATIONS

This Application claims priority of Taiwan Patent Application No. 100134106, filed on Sep. 22, 2011, the entirety of which is incorporated by reference herein.

### BACKGROUND OF THE INVENTION

### Field of the Invention

The present invention relates to electronic systems, and in particular relates to electronic systems having near field communication devices.

### Description of the Related Art

Recently, portable devices, such as handheld devices, have become more and more technically advanced and multifunctional. Due to increased convenience and functions of the devices, these devices have become necessities of life. However, multimedia management methods between electronic devices are not convenient. Therefore, there is a need for an electronic system and a content playing method thereof to overcome those problems.

### BRIEF SUMMARY OF THE INVENTION

In light of the previously described problems, the invention provides a content playing method suitable for an electronic system. The content playing method comprises the steps of: a metadata is received from a first electronic device when a second electronic device is communicatively connected to the first electronic device playing a first content, wherein the metadata comprises a current playback position of the first content and a universal resource locator of the first content; the first content is received from a server according to the universal resource locator of the first content; and the first content is continually played from the current playback position by the second electronic device.

The invention also provides an embodiment of an electronic system, comprising a first electronic device and a second electronic device. The second electronic device is communicatively connected to the first electronic device, wherein the first electronic device outputs a metadata to the second electronic device when the first electronic device is playing a first content and the second electronic device is communicatively connected to the first electronic device, such that the second electronic device receives the first content from a server according to the metadata, such that the second electronic device to continually play the first content from a current playback position according to the metadata.

A detailed description is given in the following embodiments with reference to the accompanying drawings.

### BRIEF DESCRIPTION OF THE DRAWINGS

The present invention can be more fully understood by reading the subsequent detailed description and examples with references made to the accompanying drawings, wherein:

FIG.1 illustrates a schematic view of an electronic system of the disclosure;

FIG.2 illustrates an embodiment of an electronic system of the disclosure; and

FIG. 3 illustrates a flowchart of a content playing method of the disclosure.

### DETAILED DESCRIPTION OF THE INVENTION

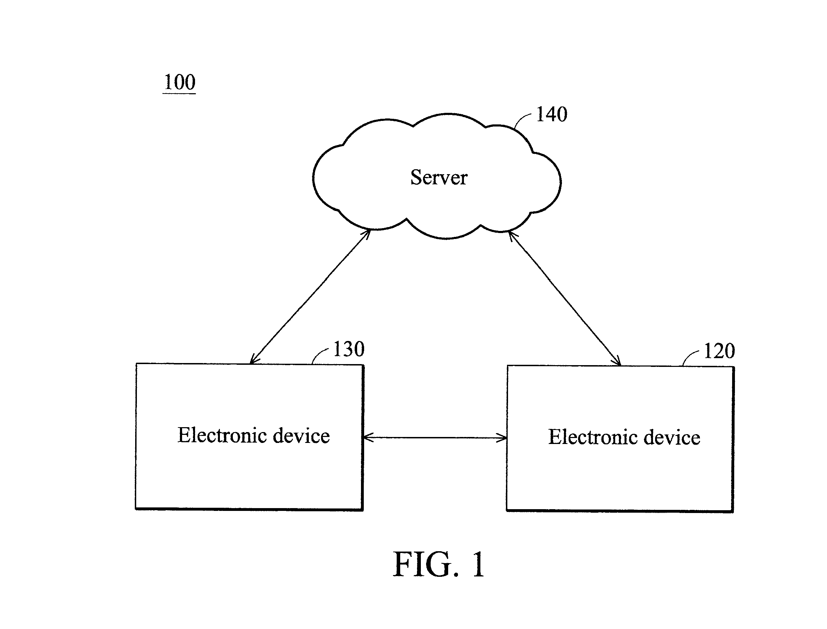

FIG.1 illustrates a schematic view of an electronic system of the disclosure. As shown in FIG. 1, an electronic system 100 includes electronic devices 120 and 130 and a server 140. Each of the electronic devices 120 and 130 has a near field communication (NFC) device, such that the electronic device 130 is communicatively connected to the electronic device 120 when the electronic device 130 is close to the electronic device 120. The electronic devices 120 and 130 can be handheld devices, portable devices, personal digital assistant (PDA), multiprocessor-based, microprocessor-based or programmable consumer electronics, network PCs, minicomputers, mainframe computers, and the like, but are not limited thereto. The server 140 can be a public cloud, a private cloud or any remote server.

In an embodiment, when the electronic device 120 is playing a first content, the electronic device 130 plays no content and the electronic device 130 is communicatively connected to the electronic device 120, the electronic device 120 outputs a metadata to the electronic device 130, such that electronic device 130 receives the first content and a current playback position of the first content from the server 140 according to the metadata, and the electronic device 130 plays the first content from the current playback position. For example, the electronic device 130 is communicatively connected to the electronic device 120 by a transport protocol compatible with a near field communication (NFC). The metadata includes the current playback position of the first content and the universal resource locator (URL) of the first content.

In another embodiment, when the electronic device 130 is communicatively connected to the electronic device 120 and the electronic devices 120 and 130 are respectively playing the first content and the second content, a signal outputted from a menu determines the electronic device 130 to continually play the second content or the electronic device 130 to continually play the first content from the current playback position. Specifically, the playing functions (e.g., the functions of playing the first content) of the electronic device 120 is replaced by the electronic device 130. Therefore, users can click the menu displayed by the electronic device 130 to generate the signal, such that the signal selects the first content or the second content to be played by the electronic device 130. In the embodiment, the first content and the second content can be audio files or video files. The video file can be in a streaming media format or in any other format, but is not limited thereto. The audio file can be in a Windows Media Audio (WMA) format, MPEG-1 Audio Layer-3 (MP3) format, musical instrument digital interface (MIDI) or in any other format, but is not limited thereto.

In some embodiments, when the electronic device 130 is communicatively connected to the electronic device 120 and the electronic devices 120 and 130 are respectively playing the first content and the second content, the electronic device 130 ignores the menu to directly and continually play the first content from the current playback position.

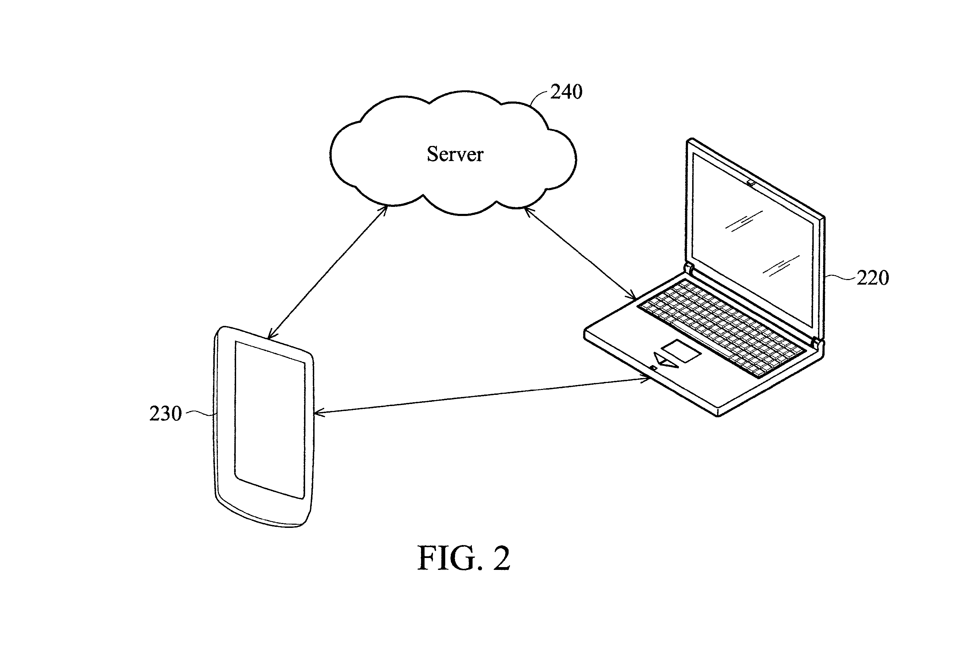

FIG.2 illustrates an embodiment of an electronic system of the disclosure. As shown in FIG. 2, the electronic device 220 can be a computer, the electronic device 230 can be a hand-held electronic device and the server 240 can be a public cloud, in which each of the electronic devices 220 and 230 has a near field communication (NFC) device. When the electronic device 220 is playing a first content, the electronic device 230 plays no content and the electronic device 230 is communicatively connected to the electronic device 220 (e.g., the electronic devices 220 and 230 are close to each other, such that the NFC devices in the electronic devices 220 and 230 are enabled), such that the electronic device 220 outputs a metadata to the electronic device 230, and the electronic device 230 replaces the playing function of the electronic device 220 to continually play the first content according to the metadata .

When the electronic device 230 is communicatively connected to the electronic device 220 (e.g., the electronic devices 220 and 230 are close to each other, such that the NFC devices in the electronic devices 220 and 230 are enabled) and the electronic devices 220 and 230 are respectively playing the first content and the second content, the menu determines the electronic device 230 to continually play the second content or the electronic device 230 replaces the playing functions of the electronic device 220 to continually play the first content. In some embodiments, the electronic device 230 ignores the menu and directly replaces the playing function of the electronic device 220 to continually play the first content.

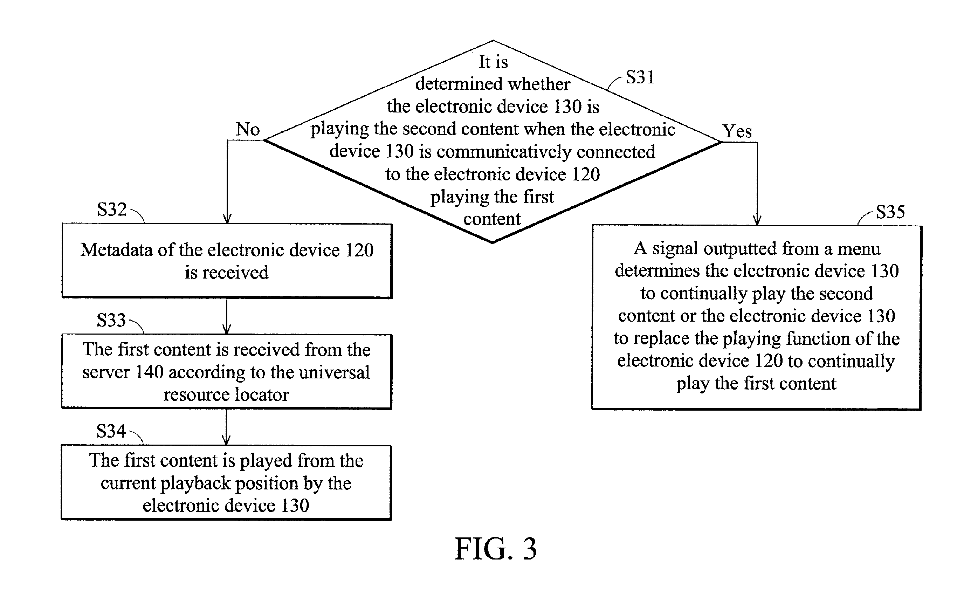

FIG. 3 illustrates a flowchart of a content playing method of the disclosure. As shown in FIG. 3, in step S31, it is determined whether the electronic device 130 is playing the second content when the electronic device 130 is communicatively connected to the electronic device 120 playing the first content. As the electronic device 130 is playing the second content, the procedure enters step S35. As the electronic device is not playing the second content (or is playing no content), the procedure enters step S32 and metadata of the electronic device 120 is received, in which the metadata includes the current playback position of the first content and the universal resource locator of the first content. In step S33, the first content is received from the server 140 according to the universal resource locator. In step S34, the first content is played from the current playback position by the electronic device 130. In step S35, a signal outputted from a menu determines the electronic device 130 to continually play the second content or the electronic device 130 to replace the playing function of the electronic device 120 to continually play the first content when the electronic device 130 is communicatively connected to the electronic device 120 and the electronic devices 120 and 130 are respectively playing the first content and the second content.

In some embodiments, in step S35, the electronic device 130 ignores the menu and directly replaces the playing functions of the electronic device 120 to continually play the first content when the electronic device 130 is communicatively connected to the electronic device 120 and the electronic devices 120 and 130 are respectively playing the first content and the second content.

In summary, a seamless content playing process of the disclosure is provided and suitable for the electronic system 100. When users have no need to use the electronic device 120, the electronic device 130 may only need to be close to the electronic device 120 such that the electronic device 130 can replace the electronic device 120 to continually play the content which the electronic device 120 is playing. Therefore, it is more convenient for the users to listen to audios or to watch videos uninterruptedly between two electronic devices.

The foregoing has outlined features of several embodiments so that those skilled in the art may better understand the detailed description that follows. Those skilled in the art should appreciate that they may readily use the present disclosure as a basis for designing or modifying other processes and structures for carrying out the same purposes and/or achieving the same advantages of the embodiments introduced herein. Those skilled in the art should also realize that such equivalent constructions do not depart from the spirit and scope of the present disclosure, and that they may make various changes, substitutions and alterations herein without departing from the spirit and scope of the present disclosure.

## Claims

1. A content playing method, comprising:
receiving a metadata from a first electronic device when a second electronic
device is communicatively connected to the first electronic device playing a first content, wherein the metadata comprises a current playback position of the first content and a universal resource locator of the first content;
receiving the first content from a server according to the universal resource
locator; and
continually playing the first content from the current playback position by the
second electronic device.

2. The content playing method as claimed in claim 1, wherein, when the second electronic device is communicatively connected to the first electronic device and the second electronic device is playing a second content, a signal outputted from a menu determines the second electronic device to continually play the second content or the second electronic device to replace playing functions of the first electronic device to continually play the first content.

3. The content playing method as claimed in claim 1, when the second electronic device is communicatively connected to the first electronic device and the second electronic device is playing a second content, the second electronic device replaces playing functions of the first electronic to continually play the first content.

4. The content playing method as claimed in claim 1, wherein the second electronic device is communicatively connected to the first electronic device by a transport protocol compatible with a near field communication.

5. The content playing method as claimed in claim 1, wherein the first content is an audio file or a video file.

6. An electronic system, comprising:
a first electronic device; and
a second electronic device, communicatively connected to the first electronic
device,
wherein the first electronic device outputs a metadata to the second electronic
device when the first electronic device is playing a first content and the second electronic device is communicatively connected to the first electronic device, such that the second electronic device receives the first content from a server according to the metadata, and the second electronic device continually plays the first content from a current playback position according to the metadata.

7. The electronic system as claimed in claim 6, wherein, when the second electronic device is communicatively connected to the first electronic device and the second electronic device is playing a second content, a signal outputted from a menu determines the second electronic device to continually play the second content or the second electronic device to replace playing functions of the first electronic device to continually play the first content.

8. The electronic system as claimed in claim 6, wherein, when the second electronic device is communicatively connected to the first electronic device and the second electronic device is playing a second content, the second electronic device replaces playing functions of the first electronic device to continually play the first content.

9. The electronic system as claimed in claim 6, wherein the second electronic device is communicatively connected to the first electronic device by a transport protocol compatible with a near field communication.

10. The electronic system as claimed in claim 6, wherein the first content is an audio file or a video file.
